# EUROPEAN PATENT APPLICATION

(11) **EP 2 259 185 A1**
(43) Date of publication of application: **08.12.2010**
(21) Application number: 08722289.9
(22) Date of filing: 17.03.2008
(51) Int. Cl.: G06F 11/34, G06F 11/30

(54) **INFORMATION ACQUISITION SUPPORT APPARATUS**

(71) Applicant: Fujitsu Limited, Kawasaki-shi, Kanagawa 211-8588 (JP)
(72) Inventor: WATANABE, Yukihiro, Kawasaki-shi Kanagawa 211-8588 (JP); MATSUMOTO, Yasuhide, Kawasaki-shi Kanagawa 211-8588 (JP); SHIMADA, Kuniaki, Kawasaki-shi Kanagawa 211-8588 (JP); OGURO, Keiichi, Kawasaki-shi Kanagawa 211-8588 (JP)
(74) Representative: Stebbing, Timothy Charles
(86) International application number: PCT/JP2008/054895
(87) International publication number: WO 2009/116126

(57) **Abstract**

An information obtaining assistance apparatus including: a system environment information storing section (11) which stores system environment information (120) on an information processing system (201); an obtaining means information storing section (12) which stores obtaining means information (17) on one or more methods of obtaining information; and a presentation information creating section (14) which creates presentation information (131) that is based on the system environment information (120) stored in the system environment information storing section (11) and the obtaining means information (17) stored in the obtaining means information storing section (12) and that represents a method of obtaining target information of the information processing system (201).

## Description

### [Technical Field]

The present invention relates to management of operation of a number of devices, and specifically relates to a technique preferably applied to obtaining information of a device included in a network system consisting of a number of devices in management of the operation in the network system.

### [Background]

In accordance with the recent growth in network scale, management of operation of a network has an important issue of managing and controlling the state and processing hardware and software (IT resources) of each device constituting a client's network so that the quality of service determined for the users (clients) can be provided and maintained.
For example, in concerning about remedying a problem (hereinafter also called an operational problem) occurring during the operation of an IT system, in the event of detection of a failure, such as low response, the cause of the problem is generally specified by alternating information related to the problem and analysis

Specifically, in remedying an operational problem, information (e.g., log and configuration) of the client end is, first of all, obtained for analyzing the problem. For example, the following Patent Literatures 1 and 2 each disclose a method of obtaining a log (system log) relative to the failure.
Then, the method analyzes the obtained information on the basis of the details of the problem; determines information required for subsequent analysis; and subsequently obtains information in accordance with the determination. In general, problem remedying, information obtaining and analysis performed alternately specifies or estimates the cause of the problem.
[Patent Literature 1] Japanese Patent No. 3704871
[Patent Literature 2] Japanese Laid-Open Patent Publication No. 2000-47908

### [Disclosure of Invention]

### [Problems to Be Solved by Invention]

In remedying an operational trouble of an IT system, various pieces of information may be obtained, such as setting of the network, the core dump, and a list of installed software programs, in addition two the log.
However, information to be obtained in remedying a problem has been conventionally determined depending on know-how of each personnel clerk who is working to remedy the problem, and actual obtaining is carried out depending on the know-how of the personnel clerk. For the above, high skills of personnel clerks have been conventionally required to remedy problems. Some levels in the skill of personnel clerk may take a long time to obtain information, which leads a considerable time to solve the problem. Conventionally, there have been problems of time and cost effectiveness.

The above specific means to obtain information is different with system environment, such as kinds of configuration (i.e., OS (Operating System) and presence/absence of dedicated tools) of devices to be managed, and a policy (account information and restriction in communication) in obtaining information. Therefore, it takes a long time to search a client configuration and to obtain information, which may increase time, process, and personnel expenses to solve the problems.

For example, in management of operation of the system of each of clients, the means to obtain information generally vary with customers, such as the means capable of managing the environment of the client A (company A) cannot be used for the environment of the client B (company B); closed port vary with customers due to security reasons (e.g., client A: telnet, client B: SHH, and client C: FTP); operation means and operation procedure vary with customers (e.g., client A: router of manufacturer d, client B: router of manufacturer e, and client C: route of manufacturer f).

In addition, information to be obtained has name and is stored in a region (a obtaining source) that are frequently varying with customers. For example, data stored under the name of "YYYY-MM-DD_product_name.log" in client A may be stored under the name of "Log_product_name_YYMMDD.log" in client B. In addition, client A may store history of patching is stored in a "configuration DB (Data Base)" but client B may store the history in a "problem management DB".

As one of the means to obtain the above information, dedicated tools one to each customer may be prepared to comply with the environment different with customers, which is however inefficient because of the requirement for a lot of processing. Furthermore, management through the use of such dedicated tools requires a lot of processing to deal with configuration modification of a client system or with an increase in amount of information to be obtained.

With the foregoing problems in view, the object of the present invention to efficiently obtain target information with ease and to flexibly deal with variation in configuration of system.

### [Means To Solve The Problem]

In order to attain the object, the apparatus has a requirement of including: a system environment information storing section which stores system environment information on an information processing system; an obtaining means information storing section which stores obtaining means information on one or more methods of obtaining information; and a presentation information creating section which creates presentation information that is based on the system environment information stored in the system environment information storing section and the obtaining means information stored in the obtaining means information storing section and that represents a method of obtaining target information of the information processing system.

### [Effect of Invention]

The disclosed apparatus has at least one of the following effects or advantages of:
(1) Specific presentation information for obtaining target information can be presented to a personnel clerk, and in the event of occurring a problem in an information processing system, the personnel clerk can easily obtain the target information that is to be effectively used to solve the problem so that the problem can be solved in a shorter time;

(2) Presentation information confirming to the system environment of information processing system, so that the problem occurring in the information processing system can be solved in a short time; and
(3) Processing and human resource need to maintain and operate of the information processing system can be economically reduced, and since there is no need to prepare a tool dedicated to each system environment, the processing and operation cost can be also reduced.

### [Brief Description of Drawing]

[Fig. 1] A diagram, schematically illustrating the configuration of an assistant system including an information obtaining assistance apparatus according to a first embodiment of the present invention;
[Fig. 2] A diagram schematically illustrating the functional configuration of the information obtaining assistance apparatus of the first embodiment of the present invention;
[Fig. 3] A diagram illustrating an example of device configuration information of the information obtaining assistance apparatus of the first embodiment of the present invention;
[Fig. 4] A diagram illustrating an example of account information of the information, obtaining assistance apparatus of the first embodiment of the present invention;
[Fig. 5] A diagram illustrating an example of a device access policy of the information obtaining assistance apparatus of the first embodiment of the present invention;
[Fig. 6] A diagram illustrating an example of a communication policy of the information obtaining assistance apparatus of the first embodiment of the present invention;
[Fig. 7] A diagram illustrating an example of storing means, information of the information obtaining assistance apparatus of the first embodiment of the present invention;
[Fig. 8] A diagram illustrating an example of obtaining means information of the information obtaining assistance apparatus of the first embodiment of the present invention;
[Fig. 9] A diagram schematically illustrating an example of the function of a presentation information creating section of the information obtaining assistance apparatus of the first embodiment of the present invention;
[Fig. 10] A diagram schematically illustrating a method of creating presentation information by the presentation information creating section of the information obtaining assistance apparatus of the first embodiment of the present invention;
[Fig. 11] A diagram illustrating an example of presentation information created by the presentation information creating section of the information obtaining assistance apparatus of the first embodiment of the present invention;
[Fig. 12] A diagram illustrating another example of presentation information created by the presentation information creating section of the information obtaining assistance apparatus of the first embodiment of the present invention;
[Fig. 13] A flow diagram illustrating a method of creation of presentation information by the presentation information creating section of the information obtaining assistance apparatus of the first embodiment of the present invention;
[Fig. 14] A flow diagram illustrating a method of checking obtaining information by the presentation information creating section of the information obtaining assistance apparatus of the first embodiment of the present invention;
[Fig. 15] A flow diagram illustrating a method of judging a combination of access means by one combination checking section of the information obtaining assistance apparatus of the first embodiment of the present invention; and
[Fig. 16] A flow diagram illustrating a method of evaluation by the combination checking means of the information obtaining assistance apparatus of the first embodiment of the present invention.

### [Legend]

10 information obtaining assistance apparatus
11 system environment information storing section
12 obtaining means information storing section
13 presentation information managing section
14 presentation information creating section
15 device configuration information
16 policy information
17 obtaining means information
18 account information
31 display
32 CPU
33 RAM
34 ROM
35 HDD
36 LAN interface (LAN I/F)
100 assistance system
101, 102 operator's terminal
103 operator
104. network
131, 131a, 131b presentation information
141 combination checking section (checking section)
161 device access policy
162 communication policy
171 storage means information
172 executing means information
201 remedied system (information processing system)
300 problem remedying system
301 problem remedying knowledge
1311 personnel information
1312 explanation information
1313 command information

### [Best Mode To Carry Out The Invention]

Hereinafter, a first embodiment of the present invention will now be described with reference to the accompanying drawings.

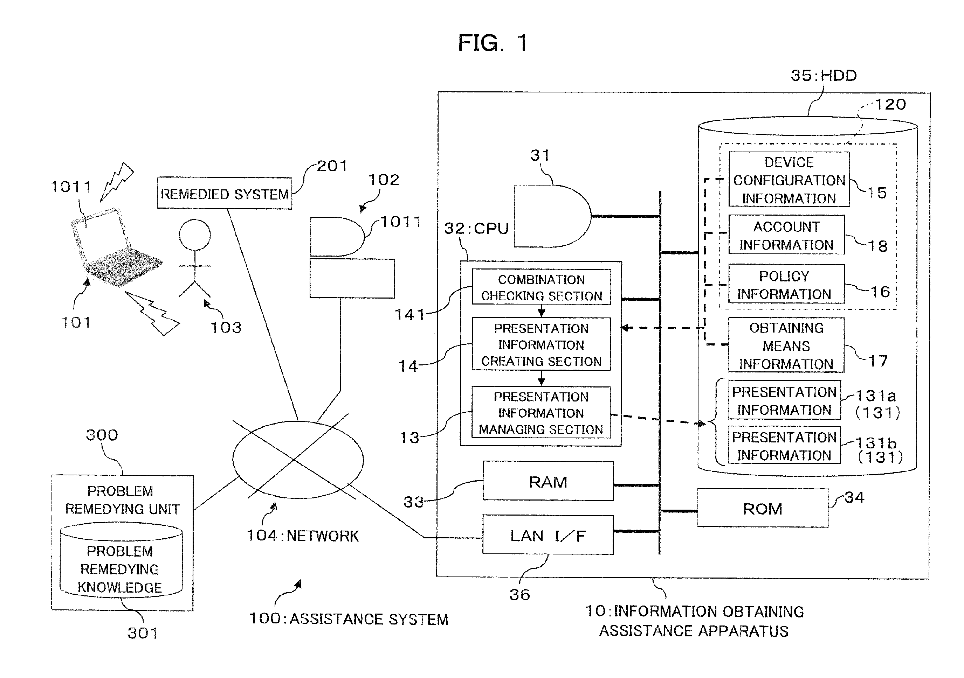

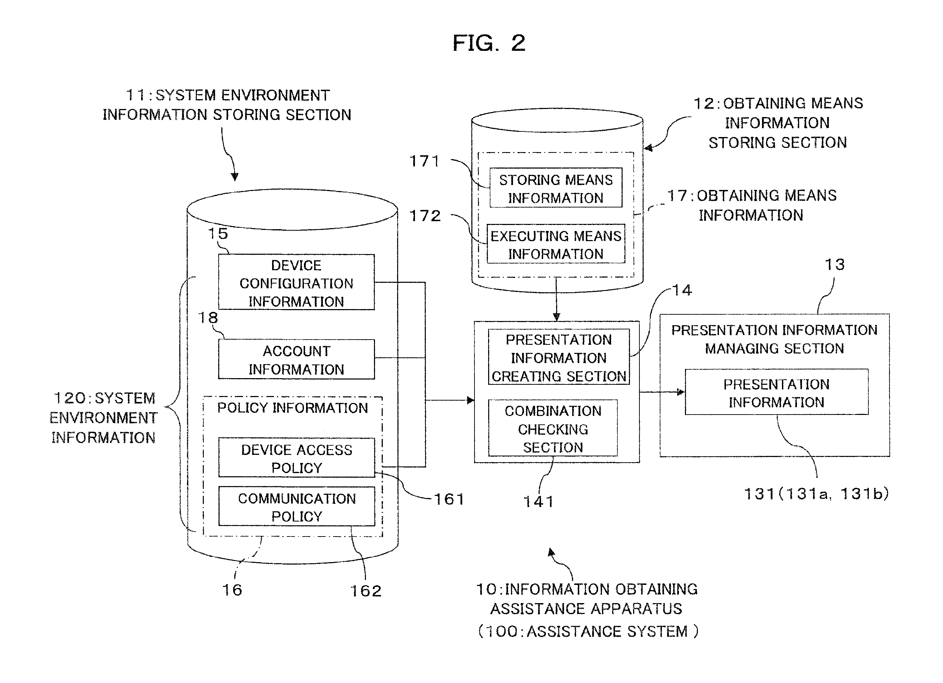

Fig. 1 is a diagram schematically illustrating an assistance system including an information obtaining assistance apparatus of the first embodiment; and Fig. 2 is a diagram schematically illustrating a functional configuration of the information obtaining assistance apparatus of the a first embodiment of the present invention.
Referring to Fig. 1, an assistance system 100 including an information obtaining assistance apparatus 10 according to the first embodiment is used, in the event of occurrence of a problem (failure) in a information processing system (hereinafter, remedied system) 201, to assist the problem remedying. The assistance system 100 assists an operator 103 and others who are remedying the problem and others to collect information about the remedied system 201.

Specifically, when the operator 103 collects information from the remedied system 201, the assistance system 100 creates presentation information 131a and 131b representing a specific method of obtaining information to be obtained (obtaining information, target information), and presents the operator 103 with the created presentation information 131a and 131b. Consequently, by referring to the presentation information 131a and 131b, the operator 103 can rapidly accomplish information obtaining procedure.

was illustrated in Fig. 1, the assistance system 100 is communicably coupled to the remedied system 201 via a network 104, and includes a problem remedying system 300, an information obtaining assistance apparatus 10, and operator's terminals 101 and 102. In the assistance system 100, the problem remedying system 300, the information obtaining assistance apparatus 10, and the operator's terminals 101 and 102 are communicably coupled to one another via the network 104.

The problem remedying system 300 executes various procedures in order to solve a problem occurring in the remedied system 201, and includes a problem remedying knowledge 301.
The problem remedying knowledge 301 is information configured to be capable of retrieving a remedying method and others to solve a problem occurring in the remedied system 201. For example, the problem remedying knowledge 301 takes the form of a database configured by registering various pieces of information of problems occurred previously in the remedied system 201, the history of remedying the problems, and various pieces of information (e.g., failure report) provided by the manufacturer in such a manner that these pieces of information can be retrieved.

The problem remedying system 300 refers to the problem remedying knowledge 301 on the basis of the contents and the signs of a reported problem, thereby determining a remedy to solve the problem occurring in the remedied system 201, and notifying the operator 103 and others of the remedy and instructions. In determining a remedy to a problem, the problem remedying system 300 determines information (target information) to be collected from the remedied system 201 if required and instructs the operator 103 and others to collect the target information from the remedied system 201.

After the operator 103 obtains the target information and sends the target information to the problem, remedying system 300, the problem remedying system 300 further analyzes the obtained target information and, on the basis of the result of the analysis, determines a remedy and instructs the operator 103 to collect another target information.
Determination of a remedy and determination and instruction of collecting target information may be realized by a computer executing one or more programs or may be carried out by an operator operating the problem remedying system 300, and can be realized by any of various methods known to the public.

Determination of target information to be obtained from the remedied system 201 may be carried out in any manner. Besides the instruction from the problem remedying system 300 as the above, the operator 103 and others may determine the target information in consideration of the contents of the trouble occurring and of the experience of the operator. Determination can be accomplished by any manner without departing from the spirit of the present invention.
The operator's terminal 101 is an information processing device used by the operator 103 that is working to solve the problem of the remedied system 201. In order to solve the problem of the remedied system 201, the operator 103 input the contents of the problem and a report of the operation and retrieves information through the use of the operator's terminal 101.

For example, the operator's terminal 101 is configured to be a portable notebook computer carried by the operator 103. The operator 103 visits the site (the customer) of installation of the remedied system 201, carrying the operator's terminal 101 and inputs the contents of the problem and the report of the operation, and retrieves information with the operator's terminal 101.
The operator's terminal 101 receives presentation information 131a and 131b sent from the information obtaining assistance apparatus 10 and displays the received information on a display 1011, so that the information can be presented to the operator. The operator 103 performs operation and processing on the remedied system 201 in accordance with the presentation information 131a and 131b and thereby collecting the target information.

Furthermore, the operator's terminal 101 is capable of directly or indirectly sending and receiving data to and from the remedied system 201. For example, data collected by the remedied system 201 can be captured into the operator's terminal 101 by communicably coupling the operator's terminal 101 to a network of the remedied system 201 and by interposing a memory medium (not illustrated) such as a memory card and others.

The information (target information) captured from the remedied system 201 into the operator's terminal 101 is sent to the problem remedying system 300 via the network 104 and the contents of the sent information is analyzed.
The operator's terminal 102 is an information processing device disposed in an IDC (Internet Data Center) geographically distant (i.e., a remote site) from the remedied system 201 and is operated by an operator (i.e., the operator 103, a remedy clerk) at the IDC. The operator's terminal 102 makes a remote access to the remedied system 201, and carries out a predetermined process on the remedied system 201 and collects target information in an attempt of solving a problem of the remedied system 201. In the first embodiment, the operator at the IDC can be regarded as the operator 103 who is working to solve the problem of the remedied system 201. However, for the sake of convenience, the operator 103 who ruses and operates the operator's terminal 102 at the IDC is called the remote operator.

Information input with the operator's terminal 102 is spent to the problem, remedying system 300 and other device via the network 104. The operator's terminal 102 receivers presentation information 131a and 131b sent from the information obtaining assistance apparatus 10, and presents the received presentation information to the remote operator by displaying the received information on the display 1011.

The remote operator that uses the operator's terminal 102 makes a connection to the remedied system 201 via the network 104 in accordance with the presentation information presented through the operator's terminal 101, and obtains target information from the remedied system 201 by remotely performing predetermined operation on the remedied system 201.
Each of the operator's terminals 101 and 102 is configured to be a computer system (information processing apparatus) equipped with the display 1011, a CPU (Central Processing Unit), a RAM (Random Access Memory), a ROM (Read Only Memory), a HDD (Hard Disk Drive), a keyboard, a mouse, and a LAN (Local Arena Network) interface. Illustration and explanation of the hardware configuration of these operator's terminals are omitted for convenience's sake.

In the operator's terminals 101 and 102, non-illustrated CPUS execute programs and thereby the above various functions are realized.
The information obtaining assistance apparatus 10 creates presentation information representing a specific method of obtaining target information and presents the created information, and includes, as illustrated in Fig. 2, a system environment information storing section 11, an obtaining means information storing section 12, a presentation information creating section 14, a combination checking section 141, and a presentation information managing section 13.

Referring to Fig. 1, the information obtaining assistance apparatus 10 is communicably coupled to the operator's terminals 101 and 102 via the network 104, and is disposed at, for example, the INC same as the operator's terminal 102. The information obtaining assistance apparatus 10 is configured to be a computer system (information processing apparatus) including a display 31, a CPU 32, a RAM 33, a ROM 34, a HDD 35, and a LAN interface (LAN I/F) 36.

Here, the display 31 displays various pieces of information and instructions. The ROM 34 serves as a storing device that stores various pieces of data and programs to be used for calculation by the CPU 32 to be detailed below. The RAM 33 serves as another storing device that temporarily stores data and programs when the CPU 32 carries out various controls and calculations. The LAN I/F 36 communicably connects the information obtaining assistance apparatus 10 to the network 104.

The HDD 35 is another storing device that stores various pieces of data and programs used for various controls and calculations performed by the CPU 32 and stores results of the calculations performed by the CPU 32.
In the information obtaining assistance apparatus 10, the HDD 35 functions as che system environment information storing section 11 (see Fig. 2) that stores system environment information of the remedied system 201 and also functions as the obtaining a means information storing section 12 (see Fig. 2) that stores obtaining means information about a method of obtaining information. Furthermore, the HDD 35 functions as a presentation information storing section that stores the presentation information 131a and 131b created by the presentation information creating section 14.

Specifically, the HDD 35 stores system environment information 120, obtaining means information 17, and presentation information 131a and 131b in predetermined region thereof.

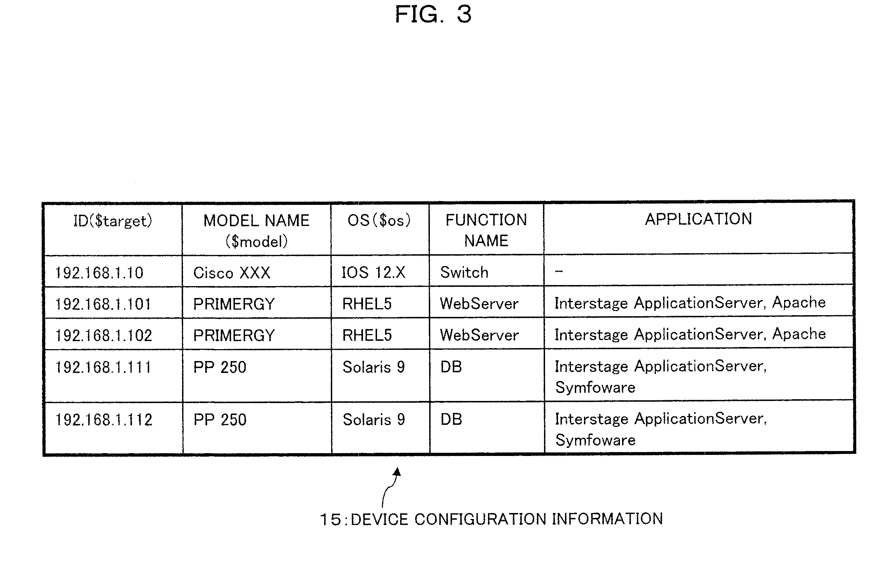

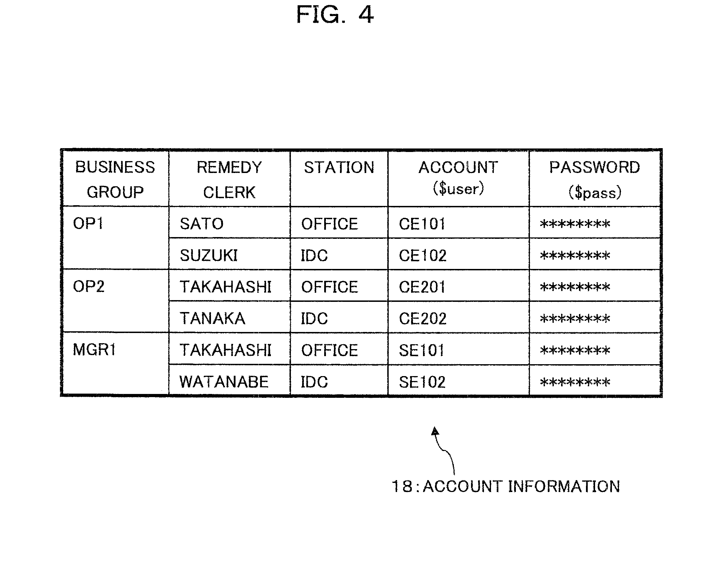

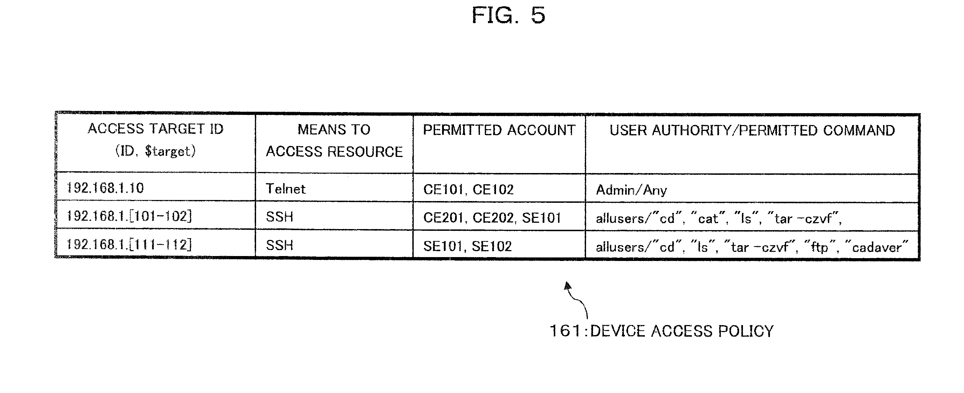

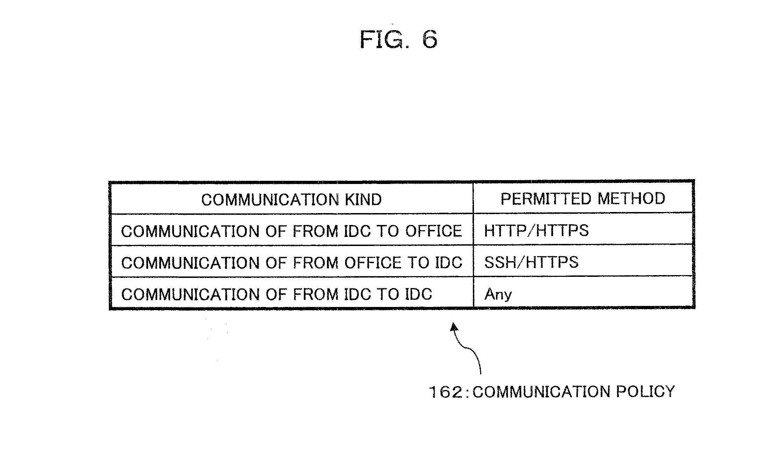

Fig. 3 is a diagram illustrating an example of device configuration information of the information obtaining assistance apparatus 10 according to the first embodiment of the present invention; Fig. 4 is a diagram, illustrating an example of account information thereof; Fig. 5 is a diagram illustrating an example of a device access policy thereof; and Fig. 6 is a diagram illustrating an example of a communication policy thereof

The system, environment information 120 it is information of the remedied system 201 and is therefore peculiar to the remedied system 201. As illustrated in Fig. 2, the system environment information 120 includes device configuration information 15, account information 18, and policy information 16.
The device configuration information 15 is information of the configuration (the hardware and software configurations) of the remedied system 201, and is configured by, as illustrated in the example of Fig. 3, associating ID, model name, OS, function name and application with one another. In the example of Fig. 3, the device configuration information 15 takes the form of a table in which information, of items (i.e., device name, OS, function name, and application) are stored in association with ID representing each device.

The item "ID($target)" is information to identify each device that constitutes the remedied system 201. In the example of Fig. 3, an IP (Internet Protocol) address is used as ID, which is hereinafter sometimes represented by a variable "$target".
The item "model name ($model) is information that represents the kind and the article name (name) of the corresponding device, and is a model number, for example. However, the model name is not limited to a model number and may include other information such as a manufacturer, a computer name determined for the remedied system 201, or a name and a character string that are arbitrarily determined. Hereinafter, the model name is sometimes represented by a variable "$model".

The item OS ($os) represents the OS (Operating System) that is mounted in the corresponding device, and is the OS such as RHEL (Red Hat Enterprise Linux) 5 (registered trademark) or Solaris 9 (registered trademark) mounted in a computer, or the name or the version, IOS (Internetworking Operating System) 12.X (registered trademark), of the controlling OS mounted on a communication device such as a router. Hereinafter, the OS is sometimes represented by a variable "$os".

The item "function name" is information that represents the function (role) assigned to the corresponding device in the remedied system 201, and is in the form of, for example, a character string of "switch", "web server", and "DB (Data Base)".
The item "application" represents the name of an application to bye executed by the corresponding device, and, assuming that the device is a computer, the name of an application to be executed is stored in the device.

The account information 18 is information of each remedy clerk (operator, remote operator) that is capable of dealing with a problem occurring in the remedied system 201, and is information of human resources to access the remedied system 201 or the assistance system 100. In the first embodiment, the remedy clerk represents an operator 103.
In the example of Fig. 4, the account information 18 takes the form of a table in which items (business group, station, account, and password) are associated with each remedy clerk.

The item "remedy clerk" represents the name (in the example of Fig. 4, family name) of each remedy clerk capable of dealing with a problem; and the item "account (Suser) is information which is peculiar to each remedy clerk to specify the remedy clerk. Hereinafter, the item "account" is sometimes represented by a variable "$user".
The item "business Group" is information that represents the department or the job title of the corresponding remedy clerk and the item "station" is the site where the corresponding remedy clerk usually works (stands by). In the example of Fig. 4, two sites of "office" and "IDC" are registered as the stations. In the example, the operators 103 (Sato, Takahashi, and Takada) that are to visit the remedied system 201 for operation are based, on the Office. Specifically, these operators 103 stand by as the Office and either of the operators 103 visits the remedied system 201 to deal with the remedied system 201.

The item "password (Spass)" is a predetermined password required for each remedy clerk to carry out predetermined processing at the remedied system 201 on the account of the corresponding remedy clerk. Hereinafter, the password is sometimes represented by a variable "$pass".
The policy information 16 is information that represents the principle of operation of the remedied system. 201 and includes a device access policy 161 and a communication policy 162.

The device access policy 161 is information that represents the principle of accessing to each device constituting the remedied system 201, and includes a method of accessing to each device, account information, and restriction for accessing from an external device. In the example of Fig. 5, the device access policy 161 includes items of access target ID, method of accessing to a resource, permitted account, and user authority/permitted command.

The item of "access target ID" is identification information to identify a device to be accessed in the remedied system 201 and uses the IDs of device configuration information 15 detailed above.
Hereinafter, detailed description of an item same as one described above is omitted, here.
In the example of Fig. 5, for convenience, the access target ID of a number of devices employing the same access policy is collectively defined (indicated) by writing different portions (dot addresses) of the address in a bracket []. For example. Fig. 5 collectively indicates access target IDs of 192.168.1.101 and 192.168.1.102.

The item #method of accessing a resource" represents a method (means) to access the target device (resource) identified by the corresponding access ID, and is specifically a protocol that can be used to access the device, such as Telnet and SSH (Secure Shell) .
The item "permitted account" represents one or more accounts which are permitted to access the target device, and accounts in the account information 18 described with reference to Fig. 4 are registered in the item "permitted account". The item "user authority/permitted command" represents a user authority and usable command capable to access the target device. In the example of Fig. 5, the user authority and the command are expressed being interposed by a slash "/*"*.

In the example of Fig. 5, an access to a device having an IP address "192.168.1.10" (switch, see Fig. 3) is permitted Mr./Ms. Sato having the account "CE101" and Mr./Ms. Suzuki having the account "CE102" (see Fig. 4)_{.} Mr./Ms. Sate and Mr_{.}/Ms. Suzuki can access the device through Telnet by login by the user authority of "AdminH, and after the login, any command can be carried out.

The communication policy 162 is information that represents the principle of operation about transmission and reception in data communication, and is specifically regulations of communication determined when solving the problem in the remedied system 201. In the example of Fig. 6, the communication policy 162 is represented in the form of a table in which a communication kind and a permitted method are associated with each other.
Here, the item "communication kind" is information that represents a path of data to be transmitted, and has, in the example of Fig. 6, three kinds of communication of '"communication from the IDC to the office", "communication from the office to the IDC", and " communication between IDCs".

The item "permitted method" is a protocol of data communication operationally permitted on the corresponding kind of communication (i.e., data path). Specifically, the example of Fig. 6 indicates that, for data communication from a the IDC to the Office, data communication via HTTP or HTTPS (HTTP/HTTPS) is only permitted and the other method is not permitted. Similarly, for data communication from the office to the IDC, data communication only via SSH or HTTPS permitted; and data communication between the IDCs is permitted via any protocol so that various communication protocols can conduct data communication.

The obtaining means information 17 is information of methods of obtaining information, and specifically is a normal method of obtaining information to be obtained. As illustrated in Fig. 2, the obtaining means information 17 includes storing means information 171 and executing means information 172.

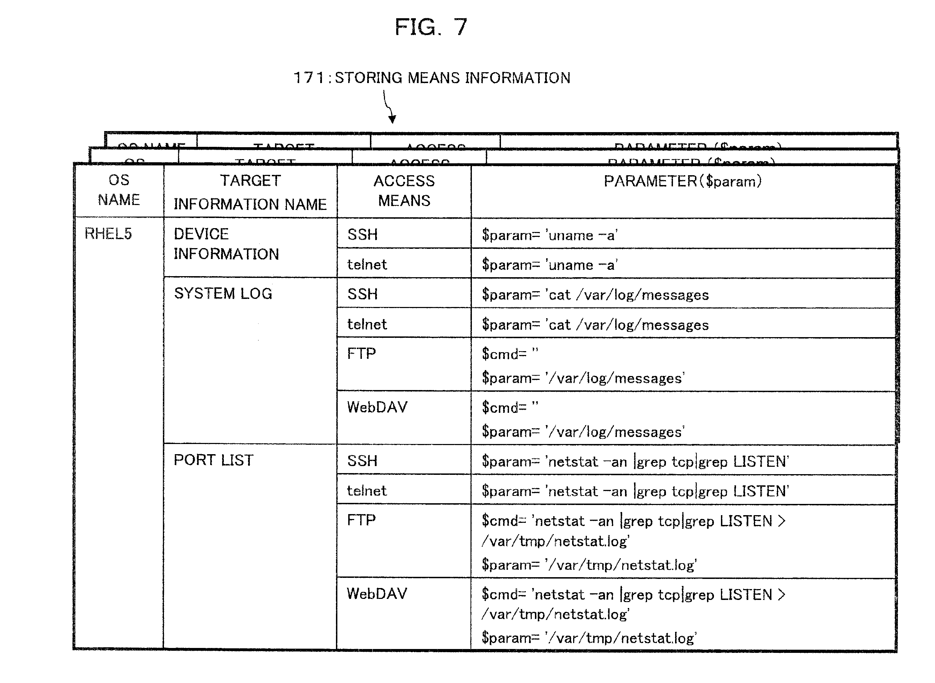

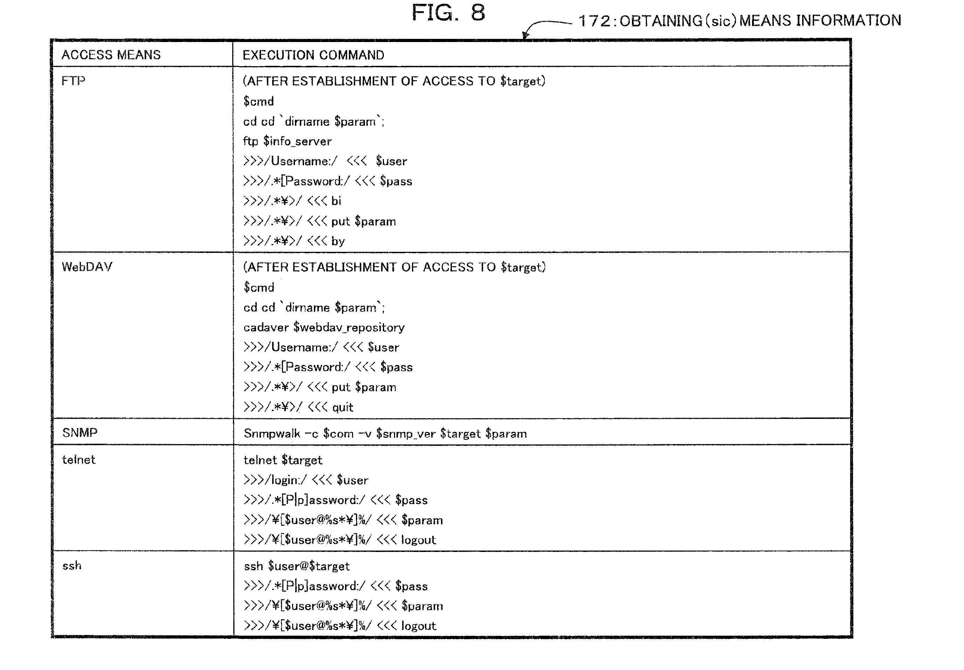

Fig. 7 is a diagram illustrating an example of the storing means information of the information obtaining assistance apparatus 10 of the first embodiment; and Fig. 8 is a diagram illustrating an example of the obtaining means information of the information obtaining assistance apparatus 10.

The storing means information 171 is information that represents a method of accessing target information, and specifically is obtainable information for each device (connection destination, OS), the position where the information is stored, and the means to obtain the information. In the example of Fig. 7, the storing means information 171 takes the form of entries (table) including target information name, access means, and parameters associated with one another for each OS.

Here, the item "OS name" is the kind or the name of each OS and corresponds to the OS name of the device configuration information 15 of Fig. 3. The OPS name in the example of Fig. 7 is RHEL5. The item "target information name" is the name of target information, and specifically is device information, system log, and port list in the example of Fig. 7. The item "access means" is a specific means (i.e., connection method and protocol) of accessing to obtain the corresponding access information, and associates the device information with SSH and telnet; the system log with SSH, telnet, FTP, and WebDAV; and the port list with SSH, telnet, FTP, and WebDAV in the example of Fig. 7.

The item "parameter" is a parameter used, after establishment of connection by the access means, to obtain the above-described target information (obtaining target information).
Referring two Fig. 7, for example, the system log operated on RHEL 5 can be obtained through access via four access methods of SSH, telnet, FTP, and WebDAV. Among these methods, access through telnet should use "cat /var/log/messages" as the parameter ($param).

The executing means information 172 is information that represents a specific method of obtaining target information and is a command (execution command, information obtaining procedure; that an operator is to execute in order to obtain the target information. In a the example of Fig. 8, the executing means information 172 takes the form of a table in which items of an access means and an execution command are associated with each other. The item "execution command" is a command input and executed by an operator obtaining the target information. In the example of Fig. 8, access means are FTP, WebDAV, SNMP, telnet, and SSH, and the execution command represents a command that is executed by these access means in order to obtain the target information. In addition, execution commands associated with FTP and WebDAV in the example of Fig. 8 are commands that should be executed after establishment of access to the device specified by ID(Starget).

The CPU (Central Processing Unit) 32 carries out various calculations and controls, and realizes various functions through executing one or more programs stored in the ROM 34 and the HDD 35.
In the information obtaining assistance apparatus 10, the CPU 32 functions as the presentation information creating section 14, the combination checking section 141, and the presentation information managing section 13 that are to be detailed below through executing an information obtaining assist program by the CPU 32 itself.

The program (i.e., the information obtaining assist program) to realize the functions of the presentation information creating section 14, the combination checking section 141, and the presentation information managing section 13 is provided in the form of being stored in a computer readable recording medium such as a flexible disk, a CD (e.g., CD-ROM, CD-R, CD-RW), a DVD (e.g., DVD-ROM, DVD-RAM, DVD-R, DVD+R, DVD-RW, DVD+RW, HD DVD), a blu-ray disk, a magnetic disk, an optical disk, or a magneto-optical disk. Further, a computer reads the program from the recording medium and sends the program to an internal or external memory to store for use. Further alternatively, the program may be recorded in a memory device (a recording medium), such as a flexible disk, a CD, a DVD, a blu-ray disk, a magnetic disk, an optical disk or a magneto-optical disk, and is provided to a computer from the memory device through a communication path.

In the realization of the functions of the presentation information creating section 14, the combination checking section 141, and the presentation information managing section 13, the microprocessor (in the present embodiment, the CPU 32) executes the program, stored in the internal stowage unit (the RAM 33 or the ROM 34). At this time, the computer may read and execute the program stored in a recording medium.

Here, a computer is a concept of a combination of hardware and an OS, and means hardware which operates under control of the OS. Otherwise, if an application program independently operates hardware of an OS, the hardware corresponds to the computer. Hardware includes at least a microprocessor such as a CPU and a means to read a computer program recorded in a recording medium. In the first embodiment, the information obtaining assistance apparatus 10 serves to function as a computer.

The recording medium used in the first embodiment may be various computer-readable recording media such as an IC card, a ROM cartridge, a magnetic tape, a punch card, an internal storage unit (RAM or ROM) for a computer, an external storage unit, or a printing matter on which codes, such as bar codes, are printed, in addition to a flexible disk, a CD, a DVD, a blu-ray disk, a magnetic disk, an optical disk and a magnet-optical disk listed above.

The presentation information creating section 14 creates presentation information 131a and 131b, which represent a method of obtaining target information of the remedied system 201, on the basis of the system environment information 120 stored in the obtaining means information storing section 12 and the obtaining means information 17 stored in the obtaining means information storing section. 12.

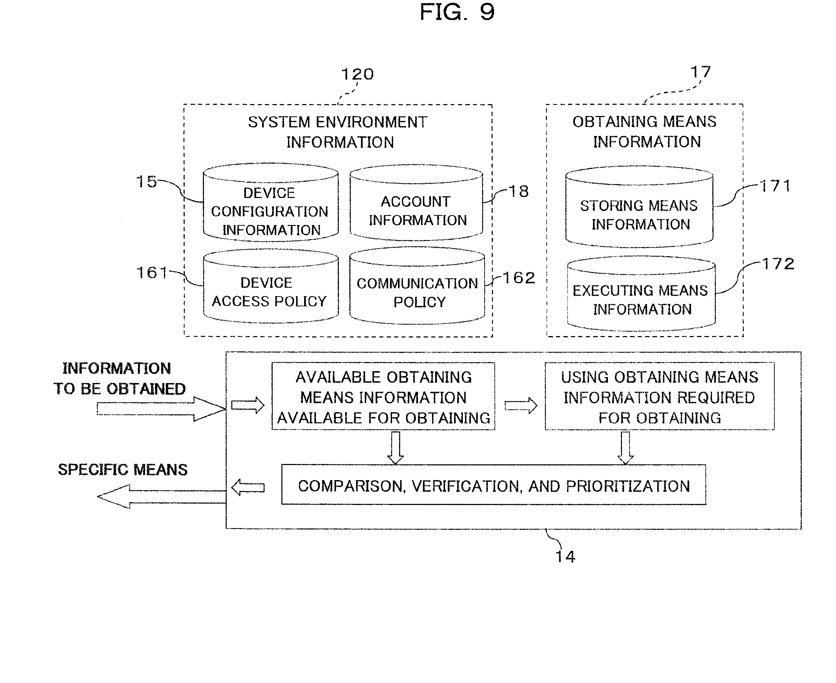

Fig. 9 is a diagram schematically illustrating the function of the presentation information creating section 14 of the information obtaining assistance apparatus 10 of the first embodiment of the present invention.

The presentation information creating section 14 extracts available obtaining means information that can be used for obtaining information (target information) that is desired to be obtained with reference to the system environment information 120, and extracts obtaining means information, as obtaining available information (required obtaining means information) required to obtain the target information with reference to the obtaining means information 17.
The presentation information creating section 14 creates presentation information indicating the specific method of obtaining the target information by comparison, verification, prioritization of the available obtaining means information and the obtaining available information.

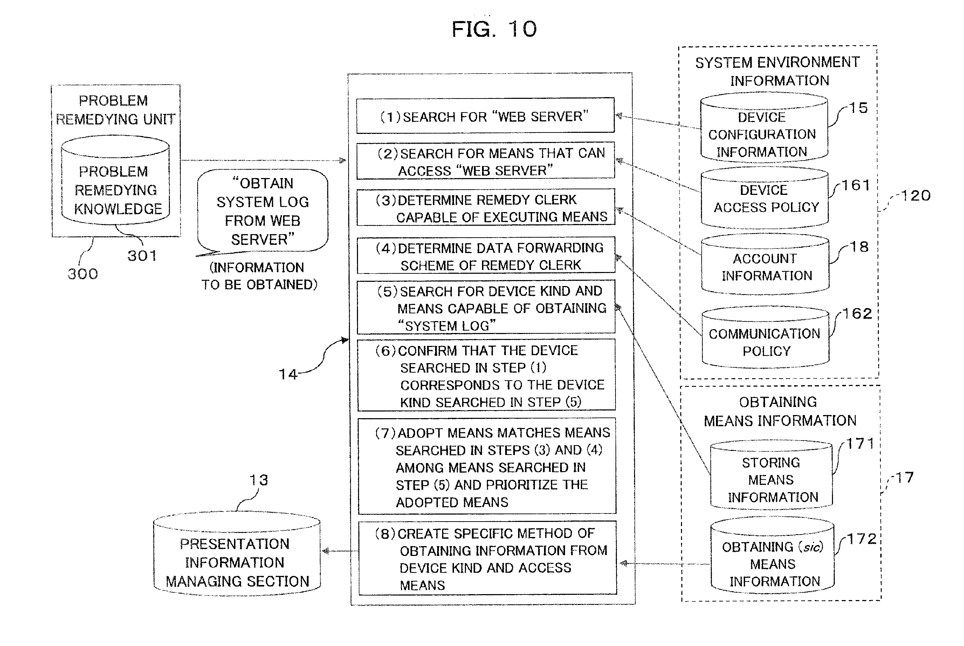

Fig. 10 is a diagram, schematically illustrating a method of creating presentation information by the presentation information creating section 14 of the information obtaining assistance apparatus 10 of the first embodiment, and illustrating an example of a method of obtaining the system log of the web server as the method of creating presentation information representing.
In the example of Fig. 10, information desired to be obtained is indicated in the form of an abstract sentence of "obtain system log of the web server"; and on the basis of the information, the operator inputs [function name=web server] and [target information name=system log] for target information.

Hereinafter, description of the present embodiment assumes that the function name and the target information name of the target information are already determined.
In the information obtaining assistance apparatus 10, the operator may input the function name and the target information name as above. Otherwise, the information obtaining assistance apparatus 10 may include a non-illustrated sentence analysis function, which divides the abstract sentence of "obtain the system log of the web server" into words and compares the divided words with previously registered key words so that the target information (function name=web server, target information name=system log) is automatically created. The determination of the function name and the target information name of the target information can be variously modified without departing from the gist of the present invention.

The presentation information creating section 14 creates the presentation information, for target information (function name=web server, target information name=system log) in, for example, the following procedural steps (1) through (8).
(1) search for the web server with reference to the device configuration information 15;
(2) search for a means that accesses the web server with reference to the device access policy 161;

(3) determine a remedy clerk capable of executing the means searched in step (2);
(4) determine a data forwarding scheme (access means) that the remedy clerk can handle with reference to the communication policy 162 and regard the determined access means as a second access means candidate (means B), which is then stored (retained) in a predetermined region (a second access candidate storing section) of the HDD 35 or the RAM 33;

(5) search for a device kind and access means that are capable of obtaining the system log with reference to the storing means information 171 and regards the searched access means as a first access means candidate (means A), which is then stored (retained) in a predetermined region (a first access candidate storing section) of the HDD 35 or the RAM 33;
(6) confirm that the device searched in step (1) corresponds to the device kind searched in step (5);

(7) adopt one of the access means (recommended access means information obtaining realization information) matching means B searched in steps (3) and (4) among means A which are searched in step (5), nere if a number our recommended access means exist, one of the access means with the highest priority is adopted as a result of prioritization; and
(8) create a specific method (presentation information) of obtaining information based on the device and the access means with reference to the executing means information 172.

In other words, the presentation information creating section 14 determiners one of more access means that can be used for access to the device storing the target information on the basis of the device configuration information 15, the storage means information 171, and the actual configuration (the hardware configuration and the software configuration) of the remedied system 201, and stores the determined access means as a first access candidates into a predetermined memory region (the first access candidate storing section) of the HDD 35 or the RAM 33.

Furthermore, the presentation information creating section 14 determines one or more access means that can be used for access to the device storing the target information on the basis of the device access policy 161, the communication policy 162, and the operational policy of the remedied system 201, and stores the determined access means as a second access candidates into a predetermined memory region (the second access candidate storing section) of the HDD 35 or the RAM 33.

The presentation information creating section 14 compares the first access candidates stored in he first access candidate storing section and the second access candidates stored in the second candidate storing section and determines matching access means to be recommended access means (information obtaining realization information) that can be used for obtaining target information.
In the above procedural step (7), if a number of recommended access means exist, the recommended access means are prioritized by, for example, providing a higher priority to an access means having a shorter turnaround time (estimated remedying time) required to accomplish the processing with a higher priority, to an access means requiring easier operation by the operator, or an access means conforming to the strictest policy, which may be appropriately combined. The prioritization can be variously modified without departing from the gist of the present invention.

A stricter policy requires more conditions and restrictions.
For example, if two or more access means are registered, to be information obtaining realization information, prioritization of providing a higher priority to an accessing means having the shortest turnaround time makes it possible to conveniently obtain the target information in a shorter time. Alternatively, prioritization of providing a higher priority to an access means makes it possible to keep the security level of the remedied system 201 high, so that reliability is improved.

The combination checking section 141 evaluates and checks whether the combination of two or more access means included in the storing means information 171 can access the target information. In the cases where the presentation information creating section 14 does not find a recommended access means by the above means (*sic*) (7), the combination checking section 141 checks whether or not the combination of means A can realize the means B.
The combination checking section 141 checks whether or not the combination of two or more access means included in the obtaining means information 17 can access the target information. Specifically, confirmation that both accessing protocol and forwarding protocol are satisfied evaluates that the communication can be established.

For example, in an attempt of forwarding data in a segment (IDC to Office) that the communication policy 162 permits only HTTP and HTTPS as the access means (means B), if it appears that the storing means information 171 include SSH, telnet, FTP, and ebDAV as usable access means (means A) or that can be used, the combination checking section 141 checks the combinations of access means included in the means A and determines to use the combination of SSH and WebDAV as the access means.

Specifically, the combination checking section 141 creates a list (list of combination of access means) including pCn elements for access means (mans A) registered as a number (p) of first access means candidates in the first access candidate storing section, reads one element (one combination element) from the list, and evaluates whether the access means (element means) of the read combination is capable of communication.

The term pCn represents the number of combinations of n different things from p things.
The evaluation whether an element means is capable of communicating is carried out by the judgment of, for example, satisfaction of the communication policy 162 and others.
The presentation information creating section 14 creates presentation information on the basis of the method (combined access means) of obtaining target information through the use of two or more access means that the combination verifying unit 142 judges to be able to access the target information.

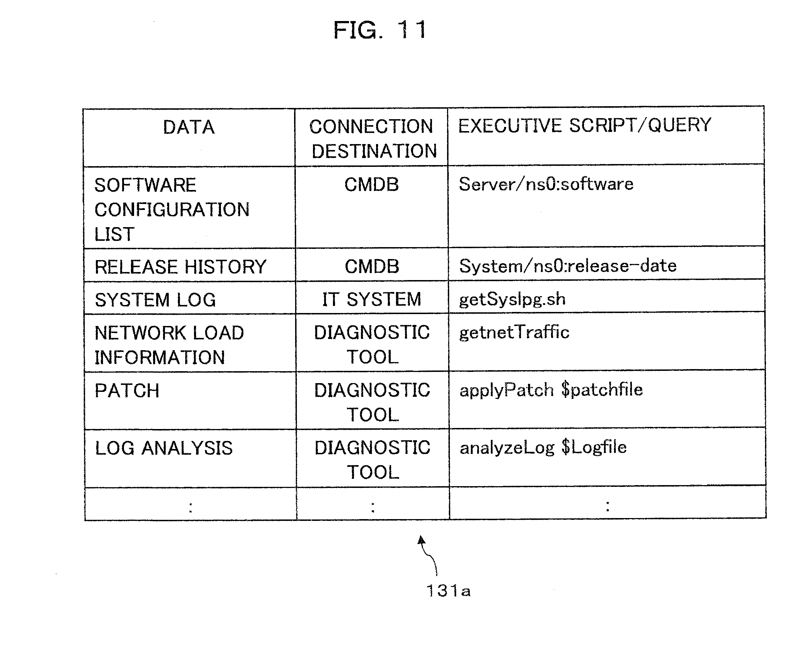

Fig. 11 is diagram illustrating an example of presentation information created by the presentation information creating section 14 of the information obtaining assistance apparatus 10 of the first embodiment.
The presentation information 131a illustrated in Fig. 11 is information presented to a remedy clerk with the intention of assisting the remedy clerk in obtaining the target information. Performing predetermined processing with reference to the presentation information 131a makes the remedy clerk possible to obtain the target information. The presentation information 131a is information configured by associating target information and a method of obtaining the target information with each other and in the form of an executive script or a query specifically representing recommended access means for each pieces of target information.

In the example of Fig. 11, the presentation information 131a is configured by associating data (target information) with a connection destination and executive script/query for each device constituting the remedied system 201.
The data is target information and corresponds to the target information name of the storing means information. 171. In the example of Fig. 11, the data includes a software configuration list, release history, a system log, network load information, patch, and log analysis.

The item "connection destination" is information representing the entity to be connected (accessed) in order to obtain the data, and includes CMDB (Configuration Managing Database), IT system, and a diagnostic tool in the example of Fig. 11.
The item "executive script/query" specifically represents access means (recommended access means) that is a script (executive scrips) or a query to be executed in order to obtain the data and that is input and executed in the operator's terminal 101 or 102, or a terminal unit of the remedied system 201 by the operator.

The presentation information 131a is created by the presentation information creating section (relevant information managing means) 14, and is stored in the HDD 35. However, the memory to store the presentation information 131a is not limited to the HDD 35 and otherwise, the presentation information 131a may be stored in another storing device (not illustrated) included in the information obtaining assistance apparatus 10, or in another storing device (not illustrated) communicably coupled to the information obtaining assistance apparatus 10. Hereinafter, the presentation information 131a is sometimes referred to as relevant information.

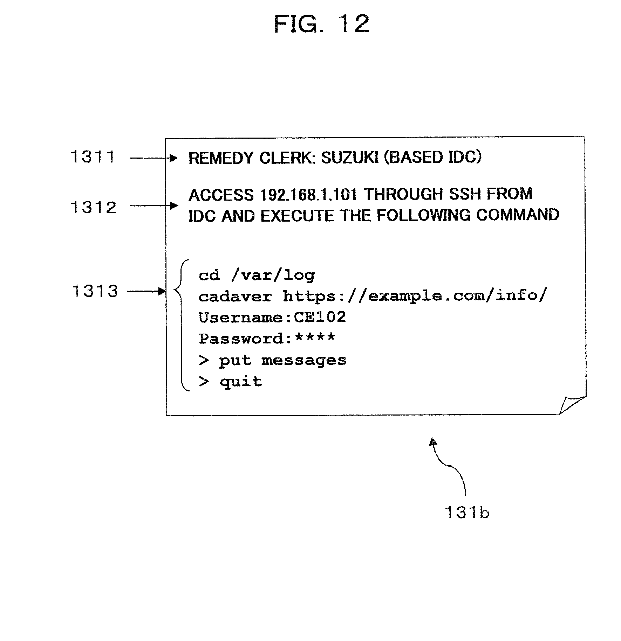

Fig. 12 is a diagram, illustrating another example of the presentation information created by the presentation information creating section 14.

The presentation information 131b illustrated in Fig. 12 is information presented no a remedy clerk with the intention of assisting the remedy clerk in obtaining the target information. Performing predetermined processing with reference to the presentation information 131b makes the remedy clerk possible to obtain the target information. The presentation information 131b of the example of Fig. 12 includes remedy clerk information 1311, explanation information 1312, and command information 1313.

The remedy clerk information 1311 is information of a remedy clerk in charge of the operation of obtaining the target information, and, in the example of Fig. 12, indicates the name and the station of the remedy clerk. The indication of the remedy clerk information 1311 is not limited to the above example, and alternatively may be information to specify the remedy clerk. The remedy clerk information 1311 can be variously modified without departing from the gist of the present invention.

The explanation information 1312 is information that indicates processing to be performed to obtain target information by the remedy clerk. In the example of Fig. 12, the command information 1313 is a command that the operator inputs and executes at the operator's terminal 101 or 102 or the remedied system 201, and specifically indicates an access means (recommended access means).
The presentation information 131b is not limited to the remedy clerk information 1311, the explanation information 1312, and the command information 1313, and alternatively may have another pierce of information or may eliminate a part, e.g., the remedy clerk information 1311, of these pieces of information, for example.

As described above, the presentation information creating section 14 of the information obtaining assistance apparatus 10 of the first embodiment is capable of creating both presentation information 131a and presentation information 131b illustrated in Figs. 11 and 12, respectively. A demand of the operator or another factor determines that either of presentation information 131a and presentation information 131b will be presented or both presentation information 131a and 131b will be presented.

Hereinafter, the reference numbers 131a and 131b are used when a number of pieces of presentation information, are discriminated from one another, but the reference number 131 is used for an arbitrary piece of the presentation information.
The presentation information managing section 13 manages presentation information 131a and 131b created by the presentation information creating section 14, and for example, controls to store the created presentation information 131 into a predetermined region of the HDD 35 of the information obtaining assistance apparatus 10 or display the presentation information 131 on the display 1011 of the operator's terminal 101 or 102, so that the 131 is presented to the operator.

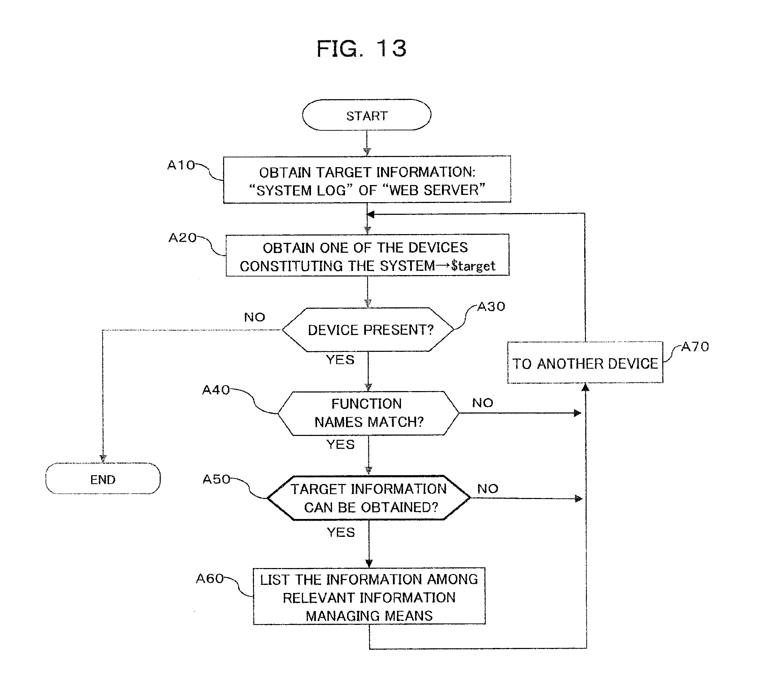

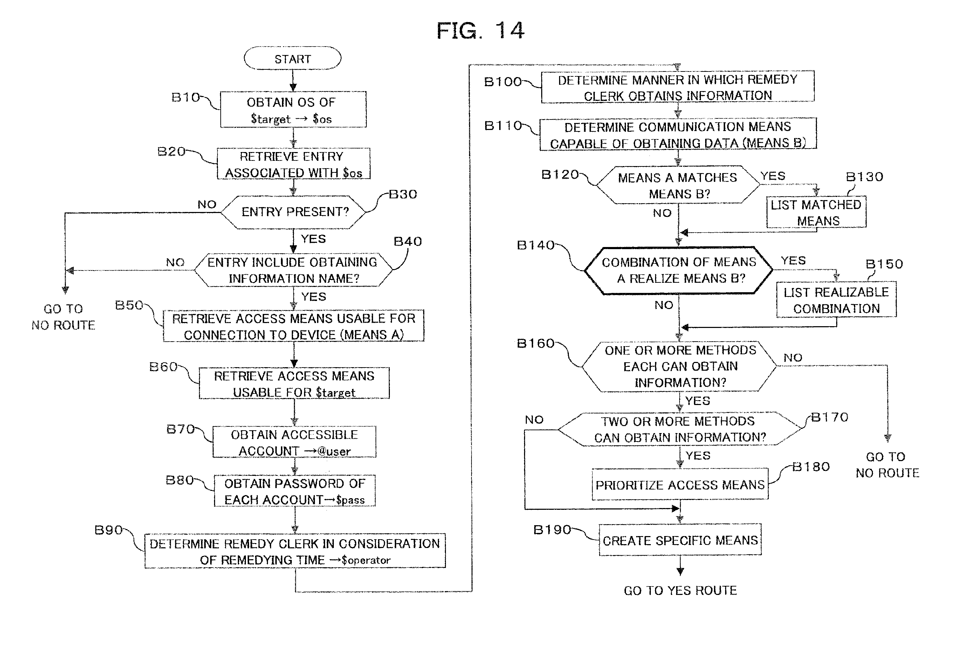

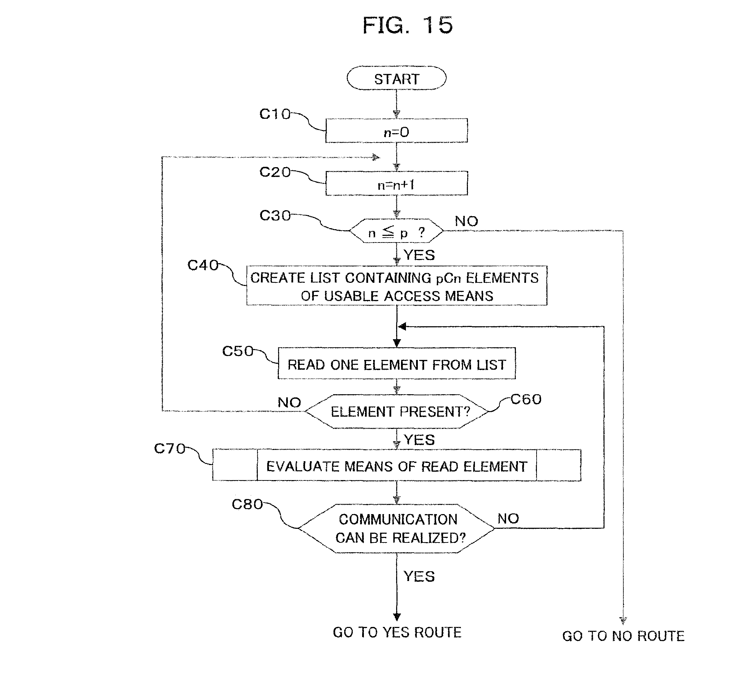

Description will now be made in relation to a method of creating presentation information in the information obtaining assistance apparatus 10 of the first embodiment along the flow diagram illustrated in Fig. 13 (step A10 to A7C) with reference to Figs. 14 and 15.
For example, upon inputting a demand of obtaining "the system log of the web server" through the operator's terminal 101 or 102 from the operator, the presentation information creating section 14 obtains the target information (target information) of [function name: web server] and [target information name: system log] based on the input demand "the system log of the web sever" (A10).

The presentation information creating section 14 selects one of the non-searched constitutional devices from the device configuration information 15 and sets (inputs) the ID (e.g., 192.168.1.101) of the selected device into the variable $target (step A20). Here, the presentation information creating section 14 confirms the presence or absence of a non-searched device in the device configuration information 15 (step A30). When confirmation resulted in the absence (NO route in step A30), the procedure is terminated.

In cases of the presence of a non-searched device in the device configuration information 15 (YES route in step A30), the presentation information creating section 14 checks whether or not the function name of the selected device ($target) matches the function name (e.g., web server) of the input target information (step A40).
If these function names do not match (NO route in step A40), the selection moves to the next ID (device) (step A70) and the procedure shifted to step A20.

Conversely, if these function names match (YES route in step A40), the presentation information creating section 14 checks whether or not the target information can be obtained (step A50). If the presentation information creating section 14 judges that the target information cannot be obtained (NO route in step A50), the procedure proceeds to step A70 and then to step A20; while if the presentation information creaming section 1 judges that the target information can be obtained (YES route in step A50), the presentation information creating section 14 lists, for the function name, a method judged to be capable of obtaining the obtainable information among the presentation information (relevant information) 131a (step A60) and then the procedure returns to steps A70 and A20.

Next, description will now be made in relation to a method of checking whether the target information can be obtained in step A50 of the flow diagram of Fig. 13 with reference to the flow diagram of Fig. 14 (steps B10 to B190).
The presentation information creating section 14 refers to the device configuration information 5 on the basis of the Starget, thereby obtaining the CS of the $target and setting (inputting) the variable $os (step B10). Then, the presentation information creating section 14 refers to the storing means information 171 on the basis of the variable $os to retrieve the presence of an entry corresponding to the OS (e.g., RHEL5) set in the $os (step B20).
If the entry corresponding to the $os is absent in the storing means information 171 (NO route in step B30), the procedure takes the NO route (NO route in step A50).

Conversely, if the entry corresponding to the $os is present in the storing means information 171 (YES route in step B30), the presentation information creating section 14 subsequently retrieves the presence or the target information name ("system log" in this example) of the input target information in the corresponding entry (Step B40). Here, the absence of the target information name of the target information in the entry (NO route in step B40) causes the procedure to take the NO route (NO route in step A50).

In a case of the presence of the target information name of the target information in the entry (YES route in step B40), the presentation information creating section 14 refers to the storing means information 171, retrieves an access means to be used for access to the device, and stores the retrieved access means as means A (step B50). In the example of Fig. 7, the retrieval obtains means A of SSH, telnet, FTP, and WebDAV for the access to the system log of the RHEL5, and SSH, telnet, FTP, and WebDAV are regarded as the means A (first access means candidates) and stored in a predetermined region (first access candidate storing section) in the HCD 35 or the RAM 33.

Next, the presentation information creating section 14 refers to the device access policy 161 to retrieve an access means that can be used to access $target (step B60). In the example of Fig. 5, the access means that can be used for access to the resource [$targe:192.168.1.101] is SSH.
Furthermore, the presentation, information creating section 14 refers to the device access policy 161 to retrieve an account that can access $target (step B70) and sets the result of the retrieval into the variable @user. In the example of Fig. 5, the accounts that can access the resource of [$target: 192.168.1.101] are CE201, CE202, and Sue101.

The presentation information creating section 14 refers to the account information 18 to obtain the password of each retrieved account and sets the obtained password into the variables $pass prepared one for each accounts (step B80). Besides, the presentation information creating section 14 decides at least one of the accounts retrieved in step B70 to be the remedy clerk, and sets the account of the remedy clerk into the variable $operator (step B90).

In a case where retrieval in step B70 obtains a number of accounts, the remedy clerk is preferably determined on the basis of travel times of each remedy clerk to be the one having the shortest time (travel time) required to reach the remedied system 201. For this purpose, the travel time of each remedy clerk is preferably registered in the account information 18 of another database (not illustrated) in association with the account of the remedy clerk.

Next, the presentation in for matron creating section 14 refers to the account information 18 on the basis of the account of the determined remedy clerk to obtain the station of the remedy clerk, and judges the kind of communication (communication path) that the remedy clerk adopts when the remedy clerk obtains information (step 3100). For example, if a remedy clerk whose station is the IDC is to obtain information, "communication from INC to office" is selected.
Then, the presentation information creating section 14 refers to the communication policy 162 on the basis of the selected kind of communication in step B100 to obtain a method permitted to the data communication (step B110), and stores the obtained permitted method as means B.

In the example of Fig. 6, HTTP and HTTPS are permitted in "the communication from IDC to office". Here, the presentation information creating section 14 stores HTTP and HTTFS, as means B (second access means candidate), into a predetermined region (second access candidate storing section) of the HDD 35 or the RAM 33.
Here, the presentation information creating section 14 compares means A stored in step B50 with means B stored in step B110 (step B120). In a case of the absence of means A and means B matching each other (NO route in step B120), and if means A includes a number of access means, the presentation information creating section 14 checks whether the combination of these access means can realize the means B (step B140). The method of checking instep B140 will be detailed, below.

The comparison results sin the presence of means A and means B matching each other (YES route in step B120), the presentation information creating section 14 stores all the matched means into a predetermined region (information obtaining realization information scoring section) of the HDD 35 or the RAM 33 and records (lists) all the matched access means as recommended access means (information obtaining realization information) (step B130). Then the procedure moves to step B140.

If a combination of some means A can realize means 3 (YES route in step B140), the presentation information creating section 14 stores (lists) the realizable combination (substitute combined access means), as the information obtaining realization information, in the predetermined region of the HOLD 35 or the RAM 33 (step B150).
After recording all the realizable substitute combined access means, as information obtaining realization method (sic), into the predetermined region of the HDD is or the RAM 33, or after any combination of some means A cannot realize the means B NO route step B140), the presentation information creating section 14 confirms, with reference to the information obtaining realization information, whether one or more access means arse registered as the information obtaining realization information (step B160). IF no access means is stored in the information obtaining realization information (NO route in step B160), the procedure takes the NO route (NO route in step A50).

If one or more access means are registered as information obtaining realization information (YES route in step B160), the presentation information creating section 14 subsequently judges whether two or more access means are registered as the information obtaining realization information (step B170). If the information obtaining realization information includes two or more access means (YES route in step B170), the presentation information creating section 14 prioritizes these access means (step B180).

Concerning the prioritization, a higher priority may be given to an access means requiring a shorter estimated turnaround time (estimated remedying time), an access means requiring easter processing of the operator, or an access means confirming with the strictest policy. Alternatively, the prioritization may depend on an arbitrary combination of the above factors.
After that, the presentation information creating section 14 extracts at least part of the information registered as the information obtaining realization information on the basis of the information registered as the information obtaining realization information and the priorities determined in step B180, and creates presentation information 131 (step B190) and takes the YES route (YES route in step A50).

Conversely, if two or more access means are not registered as the information obtaining realization information (NO route in step B170), the procedure moves to step B190.
Next, description will now be made in relation to an example of a method of judging a combination of access means in step B140 of Fig. 14 with reference to the flow diagram (steps C10 to C80) in Fig. 15.
First of all, the combination checking section 141 resets a counter by setting "0" into the counter n (step C10), and counts up the counter in increment of "1" (n=n+1) (step C20). Then the combination checking section 141 judges whether n is not more than p, that is, whether n is equal to or less than the number (p) of first access means (means A) stored in the above first access candidate storing section (step C30). Here, if n is more than p (NO route in step C30), the procedure takes the NO route (NO route in step B140).

Conversely, if n is not more than p (YES route in step C30), the combination checking section 141 creates a list (access means combination list) including pCn elements for a number (p) of access means (means A) stored as the first access, means candidates in the first access candidate storing section (step C40), and stores the created list into a predetermined region (access means combination list storing section) of the HDD 35 or the RAM 33.

Then, the combination checking section 141 reads (extracts) one element (combination element) from the access means combination list (step C50). Hers, the presentation information creating section 14 confirms whether an element is successfully read (step C60) and, if the reading of an element does not succeed (NO route in step C60), the procedure returns to step C20.

If the element is successfully read, that is, in a case of the presence of an element in the access means combination list (YES route in step C60), the combination checking section 141 evaluates whether the means of the read element is capable of communicating (step C70). The method of evaluation will be detailed below.
On the basis of the result of the evaluation, the combination checking section 141 judges whether the element is capable of communicating (step C80), and if the element is judged to be capable of communicating (YES route in step C80), the procedure takes YES route (YES route in step B140).

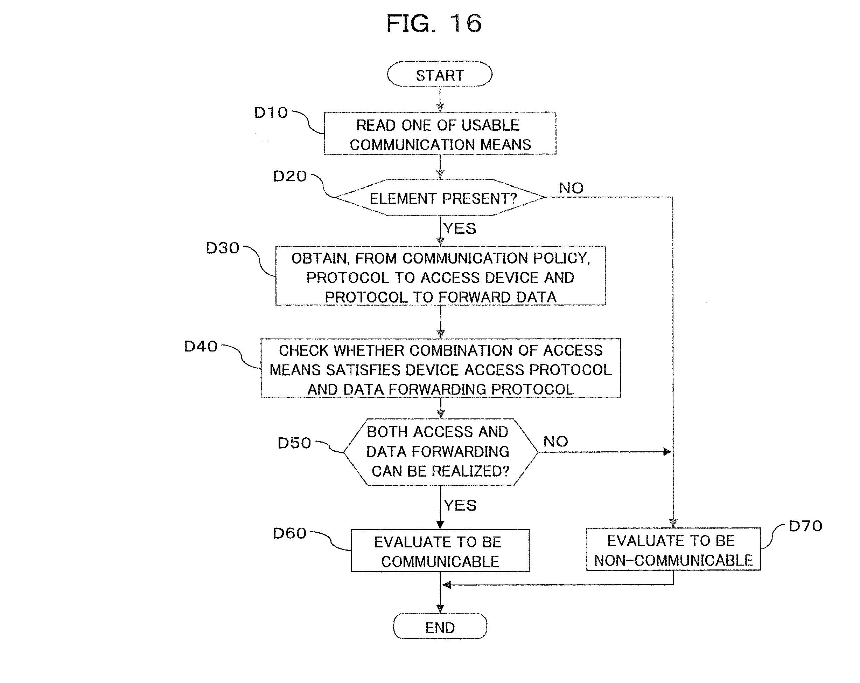

Conversely, if the extracted element is incapable of communicating (NO route in step C80), the procedure returns to step C50.
Next, description will be made in relation to the method of evaluation of the element means in step C70 with reference to the flow diagram (steps D10 through D70) of Fig. 16.
First of all, the combination checking section 141 refers to the communication policy 162 and obtains a usable communication means (permitted method) (step D10). Then, the combination checking section 141 confirms whether a usable communication means is successfully obtained (step D20), and if any usable communication means is not obtained (NO route in step D20), the combination checking section 141 evaluates that the communication is impossible (step D70), and terminates the procedure. The result of evaluation that communication is impossible is stored in a predetermined region (evaluation result storing section) of the HDD 35 or the RAM 33.

In the meantime, the combination checking section 141 obtains a usable communication means (YES route in step D20), the combination checking section 141 refers to the communication policy 162 to obtain a protocol to access to the device and a protocol to forward data on the basis of the current position of the operator and the position (of installation) of the object device (step D30).
Then, the combination checking section 141 checks whether the combination of access means read in step C50 of a flow diagram of Fig. 15 satisfies the device access protocol and the data forwarding protocol determined in step C30 (step D40).

On the basis of the result of the checking, the combination checking section 141 confirms whether both access and data forwarding are possible, that is whether both access protocol and forwarding protocol are satisfied (step D50). If both access and data forwarding are possible (YES route in step D50), the combination checking section 141 evaluates that communication is possible (step D60) and terminates the procedure.

Moreover, if at least one of the access and data forwarding is impossible (NO route in step D50), the procedure moves to step D70.
As described above, the information obtaining assistance apparatus 10 of the first embodiment can present a specific method (presentation information) to obtain target information to the operator. With this configuration, in a case of occurrence of a problem in the remedied system 201, the operator can easily obtain a specific information (target information) effectively used to solve the problem so that the problem can be solved in a shorter time. This also makes it possible to improve the satisfaction of the clients.

Furthermore, the information obtaining assistance apparatus 10 includes the device configuration information 15 representing information about the configuration (hardware and software configurations) of the remedied system 201 and the presentation information crating section 14 creates the presentation information on the basis of the device configuration information 15. The operator can obtain presentation information conforming with the hardware and software configurations of the remedied system 201, which also makes it possible to solve the problem in a shorter time.

In addiction, it is possible to reduce the processing and the human resources to maintain and operate the remedied system 201, thereby providing economical advantage. In particular, it is possible to eliminate the requirement of preparing tools dedicated to each customer's system environment, which also makes it possible to reduce the processing and the operational costs.
Furthermore, the information obtaining assistance apparatus 10 includes the policy information 16 representing information of the principle of operation of the remedied system 201 and the assistance system 100, and the presentation information creating section 14 creates the presentation information on the basis of the policy information 16. The operator can obtain the presentation invention conforming with the operation manner of the remedied system 201, so that the problem can be solved in a shorter time regardless of the operation manner of the remedied system 201.

In addition, it is possible to reduce the processing and the human resources to maintain and operate the remedied system 201, thereby providing economical advantage. In particular, it is possible to eliminate the requirement of preparing tools dedicated to each customer's system environment, which also makes it possible to reduce the processing and the operational costs.
In other words, storing the system environment information of the remedied system 201 in the system environment information storing section 11 makes the operator possible to obtain the presentation information conforming with the system environment of the remedied system 201, so that the problem occurring in the remedied system 201 can be rapidly solved.

For information to obtain the method of obtaining information, the information obtaining assistance apparatus 10 includes the obtaining means information 17 representing a general specific method to obtain target information, and the presentation information creating section 14 creates the presentation information on the basis of the obtaining means information 17. The operator can obtain accurate presentation information, so that it is possible to provide high quality support regardless of skill of the operator. Additionally, the problem occurred can be solved in a shorter time enough to improve the satisfaction of the clients.

Furthermore, the information obtaining assistance apparatus 10 may have a sentence analysis function which divides the abstract sentence, such as "obtain system log of the web server" into the words and compares each word with previously registered keywords to thereby automatically create target information (e.g., function name=web server, target information name=system long). With this configuration, the operator can obtain presentation information simply by inputting an abstract sentence representing information consumed (sic) by the operator, providing high convenience.

Even when the configuration and the operational manner of the remedied system 201 and/or assistance system 100 vary, it is required that the device configuration information 15, the account information 18, the device access policy 161, and the communication policy 162 vary in accordance with the above variation in the configuration and in the operational manner, which is easily reflected in the presentation information created by the presentation information creating section 14 using the pieces of varied information, It is also possible to reduce the operational costs.

Namely, information about the system environment of the remedied system 201 is easily managed, so that it is possible to flexibly follows variation in system environment.
In addition, even when the presentation information creating section 14 finds no recommended access means, the combination checking section 141 evaluates and checks whether the combination of two or more access means included in the storing means information 171 is capable of accessing to the target information, and the presentation information creating section 14 creates the presentation information on the basis of the access means (combined access means) judged to be able to access the target information as the result of the evaluation and checking, so that the target information can be surely obtained.

Conventionally, in the event of occurrence of a problem in the remedied system 201, information required to analyze the problem has been designated only by versatile expression. The information obtaining assistance apparatus 10 of the present invention can notify the remedy clerk remedying a problem of specifically information that "which device", "which information", and "how to obtain".
In addition, information to be managed can be classified into versatile expression and a specific method of obtaining (e.g., the obtaining means information 17). Consequently, there is no requirement that the "creator of the remedying system" that uses versatile expression and the "remedy clerk remedying the problem" that prepares information for each environment know each other, so that respective responsibilities can be departed from each other.

Various changes and modification from the first embodiment can be suggested without departing the gist of the present invention.
For example, the contents of the device configuration information 15, the account information 18, the policy information 16, and the obtaining means information 17 are not limited to ones described in the first embodiment. Each of these pieces of information may include another item or may omit one or more items, so various changes can be suggested.

For example, the account information 18 in the first embodiment includes passwords, which may be substituted by inputting the password from the operator when required.
In the above embodiment, the presentation information creating section 14 determines one or more access means (first access means candidates) on the basis of the actual configuration (the hardware and software configurations) of the remedied system 201, the device configuration information 15, and the obtaining means information 171. However, determination of the first access means candidates is not limited to this, and alternatively may be based on either one of the device configuration information 15 or the obtaining means information 17.

Besides, the presentation information creating section 14 of the first embodiment determines one or more access means (second access means candidates) on the basis of the policy of the operation of the remedied system 201, the device access policy 161, and the communication policy 162. However, determination of the second access candidates is not limited to this, and alternatively may be based on either one of the device access policy 161 or the communication policy 162.

The disclosure of the above embodiment makes those ordinarily skilled in the art to carry out and produce the present invention.

### [Industrial Applicability]

The present invention can be applied to, for example, obtaining various information in an information processing system connected via a network.

## Claims

1. An information obtaining assistance apparatus comprising:
a system environment information scoring section which stores system environment information on an information processing system;
an obtaining means information storing section which stores obtaining means information of one or more methods of obtaining information; and
a presentation information creating section which creates presentation information that is based on the system environment information stored in the system environment information storing section and the obtaining means information stored in the obtaining means information storing section and that represents a method of obtaining target information of the information processing system.

2. The information obtaining assistance apparatus according to claim 1, wherein the system environment information comprise configuration information on the configuration of each device included in the information processing system.

3. The information obtaining assistance apparatus according to claim 1 or 2, wherein the system. environment information comprise account information on human resource that are to access the information processing system.

4. The information obtaining assistance apparatus according to one of claims 1 through 3, wherein
the system environment information comprises policy information representing a policy of operation of the information processing system; and
the presentation information creating section presents, as the presentation information, a method of obtaining the target information of the information processing system which method conforms with the principle of operation of the information processing system.

5. The information obtaining assistance apparatus according to one of claims 1 through 4, wherein the obtaining means information comprises storing means information representing one or more method of accessing the target information.

6. The information obtaining assistance apparatus according to one of claims 1 through 5, wherein the obtaining means information comprises executing means information representing a procedure to be executed in order to obtain information.

7. The information obtaining assistance apparatus according to one of claims 1 through 6, wherein
the presentation information creating section stores one or more first access means candidates, representing one or more access means that can be used to access a device that stores the target information, into a first access candidate storing section on the basis of the actual configuration of the information processing system, the system environment information, and the obtaining means information;
stores one or more second access means candidates, representing one or more access means that can be used to access the device that stores the target information, into a second access candidates storing section on the basis of a policy of the operation of the information processing system, and the policy information;
compares the first access means candidates stored in the first access candidate storing section and the second access means candidates stored in the second access candidate storing section to find one or more matching access means;
determines the matching access means to be information obtaining realization information which is able to be used for obtaining the target information; and
creates the presentation information based on obtaining means information corresponding to the information obtaining realization information.

8. The information obtaining assistance apparatus according to one of claims 1 through 7, further comprising a combination checking section which checks whether or not a combination of two or more access means included in the storing means information is capable of accessing the target information,
wherein the presentation information creating section creates, as the presentation information, a method of obtaining the target information through the two or more access means that the combination checking section judges to be capable of accessing the target information.

9. The information obtaining assistance apparatus according to one of claims 1 through 8, wherein when two or more access means each are capable of accessing the target information, the presentation information creating section creases the presentation information in which one of the access means that has a shortest remedying time is preferentially used.

10. The information obtaining assistance apparatus according to one of claims 1 through 9, wherein when two or more access means each are capable of accessing the target information, the presentation information creating section creases the presentation information in which one of the access means mat complies with a strict (stricter) policy is preferentially used.
